# EUROPEAN PATENT SPECIFICATION

(11) **EP 2 195 181 B1**
(45) Date of publication and mention of the grant of the patent: **17.09.2014**
(21) Application number: 08834492.4
(22) Date of filing: 26.09.2008
(51) Int. Cl.: B60J 3/02

(54) **VISOR MADE FROM A VEHICLE PANEL MATERIAL**
AUS EINEM FAHRZEUGPLATTENMATERIAL HERGESTELLTES VISIER
PARE-SOLEIL FABRIQUÉ À PARTIR D'UN MATÉRIAU DE PANNEAU DE VÉHICULE

(30) Priority: 27.09.2007 US 975651 P
(43) Date of publication of application: 16.06.2010
(73) Proprietor: Johnson Controls Technology Company, Holland, MI 49423 (US)
(72) Inventor: KRING, Christopher, S., Zeeland MI 49464 (US); SAPAK, Ben, E., West Olive MI 49460 (US); HAAK, Albert, C., Holland MI 49424 (US); VANHOUTEN, Dennis, J., Wyoming MI 49509 (US); ASSELIN, Eric, C., Holland MI 49424 (US); HOMIK, William, J., West Olive MI 49460 (US)
(74) Representative: Meissner, Bolte & Partner GbR
(86) International application number: PCT/US2008/077773
(87) International publication number: WO 2009/042822

(56) References cited:
- EP-A- 0 709 242
- WO-A-99/03694
- WO-A-03/033286
- US-A- 3 199 913
- US-A- 6 033 005

## Description

### BACKGROUND

The present disclosure relates generally to visors for use in vehicles (e.g., automobiles such as cars, trucks, and the like; airplanes, boats, etc.). More specifically, the present disclosure relates to the structure of visors and to a method of manufacturing visors.

Visors are often used in vehicles to shield an occupant from sunlight or glare and/or to support a vehicle component or accessory (e.g., vanities, lamps, electronic devices, vehicle controls, etc.). One type of visor has a butterfly or clamshell type core portion formed of a polymer or cardboard that is at least partially covered by a cover material such as a fabric. The cover material often overlaps or is wrapped over the perimeter edges of the core portion so that when the core portion is folded about a midpoint, the perimeter edges of each half of the core portion meet and the cover material is tucked therebetween to create a tucked edge intended to have an aesthetically attractive appearance. Document US-6033005 discloses a visor with a visor body having a rigid core, with a first body portion and a second body portion, wherein the first body portion and the second body portion at least partially conceal the carrier. Document WO 03/033286 A1 discloses a visor assembly including a first panel and a second panel, wherein a sheet of material is applied over the first and second panels.

Such visors and methods for making the visors have certain disadvantages. For example, the labor and/or equipment costs to wrap and tuck cover material over the core portion tends to be expensive. By further way of example, when the cover material is wrapped and tucked over the core portion, the appearance of the visor is often of poor quality due to defects such as wrinkles around curves or radii of the visor core or other undesirable effects that tend to require additional operations or effort to resolve which may reduce the cost-effectiveness of such cover materials and methods for visor applications. Further still, a cover material that is wrapped over a core portion having a concave profile tends to bridge the concave areas when pulled tight rather than follow the contours of the core portion.

Other visors may be formed with a structural core portion formed in a blow molding operation. However, such blow molded cores typically do not provide certain desired surface characteristics (e.g. soft-touch, upholstered-feel, aesthetically appealing surface texture and appearance, etc.). Certain blow molded cores may be covered with an over-molded material to provide the desired surface characteristics to the visor. However, adhesives and other fasteners for attaching the cover to the core are subject to eventual separation, and most visors tend to be relatively low cost production items and such additional manufacturing processes tend to add cost and delay to production of the visors.

Accordingly, there continues to be a need to provide an improved visor and a method for producing such visors for use in vehicles that includes an inner structural core material and an outer cover material. There is also a need to provide visors and a method for making visors that may be manufactured in a relatively simple and efficient manner with reduced manufacturing and material costs.

### SUMMARY

These problems are solved with a method and a visor according to the independent claims. Advantageous embodiments may be taken from the dependent claims.

### BRIEF DESCRIPTION OF THE DRAWINGS

FIGURE 1 is a partial front view of a vehicle having a visor according to an exemplary embodiment.
FIGURE 2 is an isometric view of a visor according to an exemplary embodiment.
FIGURE 3 is an exploded isometric view of the visor of FIGURE 2 according to an exemplary embodiment.
FIGURE 4 is an isometric view of a visor body of the visor of FIGURE 3 shown in a relatively flat position.
FIGURE 5 is a cross sectional view of the visor body of FIGURE 4 taken along a line 5-5.
FIGURE 6 is an isometric view of a carrier of the visor of FIGURE 3.
FIGURE 7 is a cross sectional view of the visor of FIGURE 2 taken along a line 7-7.
FIGURE 8 is a cross sectional view of the visor of FIGURE 2 taken along a line 8-8.
FIGURE 9 is an isometric view of a visor body shown according to another exemplary embodiment.
FIGURE 10 is a cross sectional view of the visor body of FIGURE 9 taken along a line 10-10.
FIGURE 11 is a cross sectional view of a visor having the visor body of FIGURE 9.
FIGURE 12 is a top plan view of a sheet material showing a cut out for a headliner according to an exemplary embodiment.

### DETAILED DESCRIPTION

Referring generally to the FIGURES, exemplary embodiments of a visor for use in a vehicle (e.g., automobiles such as cars, trucks, sport utility vehicles, minivans, buses, and the like; airplanes, boats, etc.) are shown. The visor includes a visor body that can be made from the same stock material used to form an interior panel (e.g., headliner, door panel, side panel, etc.) of the vehicle. According to an exemplary embodiment, the visor body is made from a portion of the material that is leftover (e.g., scrap, cutouts, etc.) or otherwise not needed to form the vehicle panel. Forming the visor of the same material used to form an interior vehicle panel may provide for a more efficient use of materials, may reduce the amount of waste material and/or may minimize the number of different materials that need to be stored for production. Such visors may be provided in a wide variety of sizes, shapes, and configurations, and with various accessories or hardware for adapting the visor for use in the vehicle or improving its functionality according to various exemplary embodiments. All such configurations are intended to be within the scope of the appended claims.

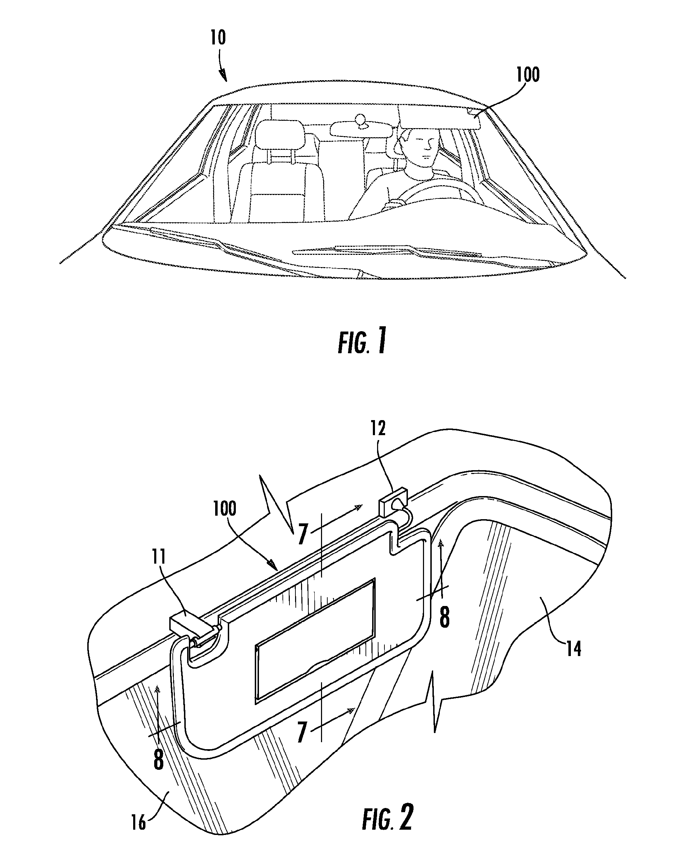

Referring to FIGURES 1 and 2, a visor 100 is shown according to an exemplary embodiment supported within a vehicle 10. The visor 100 is supported with the vehicle using a first mounting bracket 11 and a second mounting bracket 12. The first mounting bracket 11 may be configured to releasably retain the visor 100 or fixedly retain the visor 100 depending on the application. The second mounting bracket 12 may have any suitable structure (e.g. pivot rod, slide mechanism, torque clip, etc.) configured to permit a desired operation of the visor 100, such as swiveling between a lateral side window 14 position and a forward windshield 16 position, sliding between a retracted and an extended position, rotating between an upper nonuse position and a lower sun-blocking position, etc.

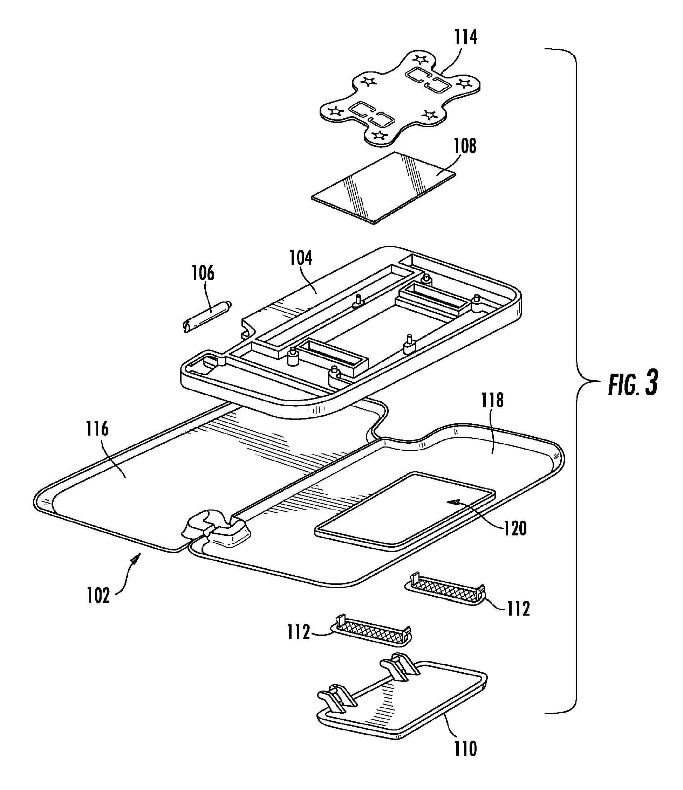

FIGURE 3 illustrates an exploded view of the visor 100 according to an exemplary embodiment. The visor 100 generally includes an outer portion (e.g., shell, housing, visor blank, etc.), shown as a visor body 102, and an internal member (e.g., frame, sub-frame, structural or support member, etc.), shown as a carrier 104. According to the embodiment illustrated, the visor 100 also includes a mounting or latching device, shown as a pin 106, for securing the visor 100 to the first mounting bracket 11. The visor 100 is further shown as including a vanity pack having a mirror 108, a cover 110, one or more lenses 112 and a printed circuit board (PCB) 114 or stamping that provides power to a light source used to illuminate an area around the mirror 108.

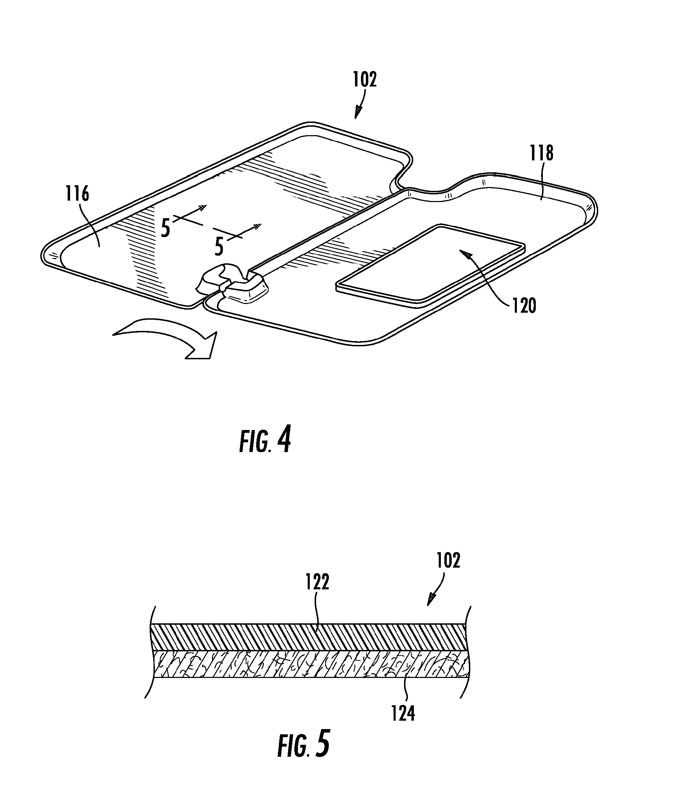

Referring to FIGURE 4, the visor body 102 is shown in a substantially flat or preassembled position. As noted above, the visor body 102 is formed of the same material used to form an interior vehicle panel (e.g., headliner, door panel, side panel, etc.). According to an exemplary embodiment, the visor body 102 is formed of a headliner stock and is shaped using a thermo forming process to form visor body 102 that includes a first body portion 116 and a second body portion 118. The first body portion 116 and the second body portion 118 cooperate to at least partially conceal or enclose the carrier 104 when the visor body 102 is moved (e.g., folded, rotated, etc.) to an assembled position. The first body portion 116 and/or the second body portion 118 may be formed with one or more apertures or recesses for receiving various vehicle components configured to be supported by the visor 100. For example, the second body portion 118 is shown as having an opening 120 that is configured to be associated with the vanity so that a vehicle occupant access the mirror 108 upon actuating the cover 110. The visor body 102 may have additional openings for receiving mounting devices, audio speakers, wires, etc.

According to an exemplary embodiment, the first body portion 116 is integrally formed with the second body portion 118 to provide a one-piece visor body. According to the embodiment illustrated in FIGURE 4, the first body portion 116 is integrally formed with the second body portion 118 along a top edge of the visor 100. In such an embodiment, at least one of the first body portion 116 and the second body portion 118 is configured to be rotated or folded towards the other body portion until a bottom edge of the first body portion 116 engages, or is at least near, a bottom edge of the second body portion 118. Once the visor body 102 folded, the free ends of the first body portion 116 and the second body portion 118 are bonded together with a suitable process (e.g., reheating the material, adhesives, sewing, etc.) and/or a mechanical fastening member such as a flexible or rigid trim welt. According to the various alternative embodiments, the first body portion 116 and the second body portion 118 may be formed as separate members that are subsequently coupled together.

The free edges of the first body portion 116 and the second body portion 118 are formed so that when the visor body 102 is moved to the assembled position (e.g., when the visor body 102 is folded in half by folding one of the first body portion 116 and the second body portion 118 towards the other of the first body portion 116 and the second body portion 118, etc.), the edges of the first body portion 116 and the second body portion 118 that engage corresponding edges of the other body portion will form a generally smooth or continuously contour with the front and rear faces of the visor 100. For example, one or more of the edges may be folded inward, kiss cut, pinch cut, die cut, water jet cut, etc. to provide such a configuration.

FIGURE 5 illustrates a cross section of the visor body 102 according to an exemplary embodiment. According the embodiment illustrated, the headliner stock used to form the visor body 102 is a multi-layer sheet material having a rigid substrate, shown as a core 122, and at least one layer (e.g., skin, film, coverstock, etc.), shown as a cover material 124, at least partially covering an outer surface of the core 122. The cover material 124 may be coupled directly or indirectly to the outer surface of the core 122. According to an exemplary embodiment, the cover material 124 is coupled to the outer surface of the core 122 before the visor body 102 is formed (e.g., thermoformed, cut, stamped, etc.) from the sheet material. The cover material 124 may be coupled to the outer surface of the core 122 using any suitable process (e.g., a lamination process using heat and/or pressure, an adhesive, a molding process, etc.).

Forming the visor body 102 from a sheet material that already includes a cover material attached thereto, eliminates the need to wrap the core portion with a cover material after the visor has been formed. As such, forming the visor body 102 from a sheet material that already includes a cover material attached thereto may reduce defects such as wrinkles around curves or radii of the core 122 or other undesirable effects that result when a cover material has to be subsequently wrapped around a core. Also, such a configuration may advantageously the cover material 124 to follow the contours of the core 122, even if the visor 100 includes concave portions. This may allow the visor 100 to be shaped to fit the contours of a headliner and/or garnish trim or allow the visor 100 to be shaped to include a storage pocket without sacrificing the appearance of the visor 100.

The core 122 functions as a structural support for the visor 100, but may also help to dampen noise in the visor 100 (e.g., bumping, shaking, rattling, etc.). According to an exemplary embodiment, the core 122 is formed from a rigid plastic material such as polyethylene, polypropylene, polystyrene, polyvinyl chloride, copolymers or any other suitable material. The core 122 may be a reinforced core having one or more fibers (e.g., glass, metal, ceramic, synthetic, graphite, etc.) dispersed therein to provide additional structural support. According to one exemplary embodiment, the core 122 is a relatively light material that has a mass of less than approximately 800 grams per square meter. According to the various alternative embodiments, the core 122 may have any of a variety of masses, including a mass of greater than approximately 800 grams per square meter.

The cover material 124 constitutes the outer or exposed material of the visor 100 and provides a finished appearance that may be custom-suited to a decorative trim or finish scheme for the interior of the vehicle 10. According to an exemplary embodiment, the cover material 124 is made of relatively soft and pliable material. The cover material 124 may be a fabric formed of a non-woven fabric, a woven fabric or a combination of woven and non-woven materials. The cover 124 may be a fabric made from organic fibers, inorganic fibers, synthetic fibers or combinations thereof.

While FIGURE 5 only shows the headliner stock as including two layers (i.e., the core 122 and the cover material 124), the headliner stock may include any of a number of layers. For example, an additional layer of material, such as a cushioning material may be provided between an outer surface of the core 122 and the inside of the cover material 124 to provide a more enhanced padded or cushioned appearance and/or feel. Such a cushioning material may also serve to improve the performance of the visor 100 in the event of impact by the head of a vehicle occupant. The cushioning material may be formed of a variety of suitable materials including, but not limited to, a polyurethane foam or an expanded polypropylene foam. Further still, additional layers of material maybe provided anywhere relative to the core 122 and/or the cover material 124 and function as acoustical barriers, acoustical conduits, tie layers, adhesive layers, decorative layers, structural layers, etc. The number and type of layers chosen may depend on any of a variety of factors, including the desired look and feel of the outer surface of the visor, materials costs, ease of manufacturing, etc.

According to the various alternative embodiments, the visor body 102 may have a size, shape, and configuration that is adapted or configured to suit any particular visor application for an intended vehicle. The visor body 102 may be formed with any suitable recesses or other structures for receiving a desired set of accessories, and the surfaces of the cover material 124 may be provided with any suitable texture or combination of textures to create a desired appearance and feel. The size, shape, and configuration of the core 122 and cover material 124 may have any number of forms, and relatively complex geometries may be formed due to the formation of the visor body 102 from a vehicle panel.

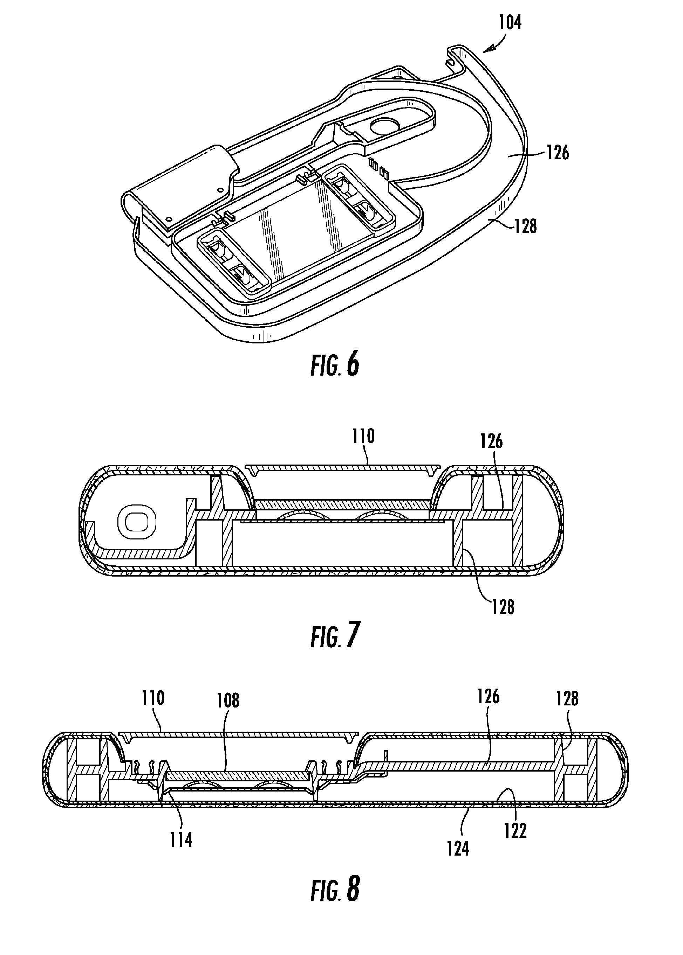

Referring to FIGURE 6, the carrier 104 is shown according to an exemplary embodiment assembled with the vanity pack. According to an exemplary embodiment, the carrier 104 provides an underlying frame or structural support for the visor 100. The carrier 104 maybe provided in any suitable shape and size to suit an intended application and to receive certain desired components or hardware. According to the embodiment illustrated, the carrier 104 is configured to receive and support the pin 106 and the vanity pack which includes the mirror 108, the cover 110, lenses 112 and printed circuit board 114. The mirror 108 may be a rigid material such as a rigid plastic or glass that includes a silvered side or a mirrored sheet that is stretched across the carrier and aligned with the opening 120 in the second body portion 118 of the visor body 102. The printed circuit board 114 may be coupled to the carrier 104 with features such as barbed posts to trap the mirror 108 against the carrier 104. According to the various alternative embodiments, the carrier 104 maybe configured to support additional accessories such as remote control devices (e.g., Homelink(R), etc.), electronics (e.g., video displays, audio components, etc.), additional mounting structures (e.g., torque clips, mounting brackets, etc.), etc.

According to an exemplary embodiment, the carrier 104 includes a platform or base 126 and a one or more projections (e.g., walls, protrusions, etc.), shown as ribs 128, extending outward from the base 126 at an orientation that is substantially perpendicular to the base 126. As shown in FIGURES 7 and 8, the ribs 128 extend outward from both sides of the base 126. The ribs 128 have a free ends configured to engage the core 122 of the visor body 102 when the visor body 102 is moved to an assembled position to facilitate the coupling of the visor body 102 to the carrier 104. According to an exemplary embodiment, the ribs 128 are coupled to the core 122 of the visor body 102 via a thermo forming process. According to the various alternative embodiments, the carrier 104 may not be needed for structural support if the core 122 of the visor body 102 provides sufficient rigidity and strength for the visor 100. In such embodiments, the carrier 104 may be eliminated and/or may be used solely as a mounting structure for one or more accessories (e.g., vanity packs, remote control devices, electronics, mounting structures, etc.).

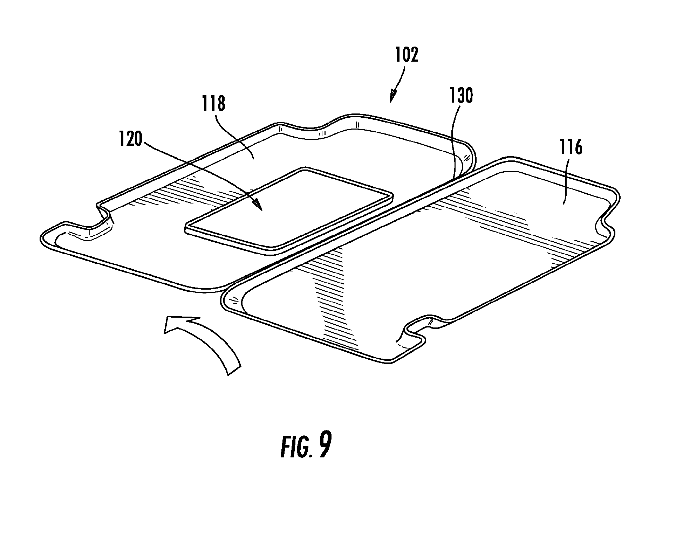

Referring to FIGURE 9, a visor body 102 is shown according to another exemplary embodiment. The visor body 102 of FIGURE 9 is similar to the visor body 102 detailed above with reference to FIGURE 4 except that the first body portion 116 and the second body portion 118 of the visor body 102 are coupled along a different edge. Specifically, the first body portion 116 and the second body portion 118 are shown as being integrally formed along a bottom edge of the visor 100. hi such an embodiment, at least one of the first body portion 116 and the second body portion 118 is configured to be rotated or folded towards the other body portion until a top edge of the first body portion 116 engages, or is at least near, a top edge of the second body portion 118.

The edge about which the first body portion 116 and/or the second body portion 118 is folded provides a seamless edge for the visor 100 once assembled. Accordingly, integrally forming the first body portion 116 and the second body portion 118 along a bottom edge of the visor 100 may provide for improved aesthetics within the vehicle 10 because this seamless edge is now provided along the bottom of the visor 100 (i.e., the edge of the visor 100 that is most likely to be visible to a vehicle occupant).

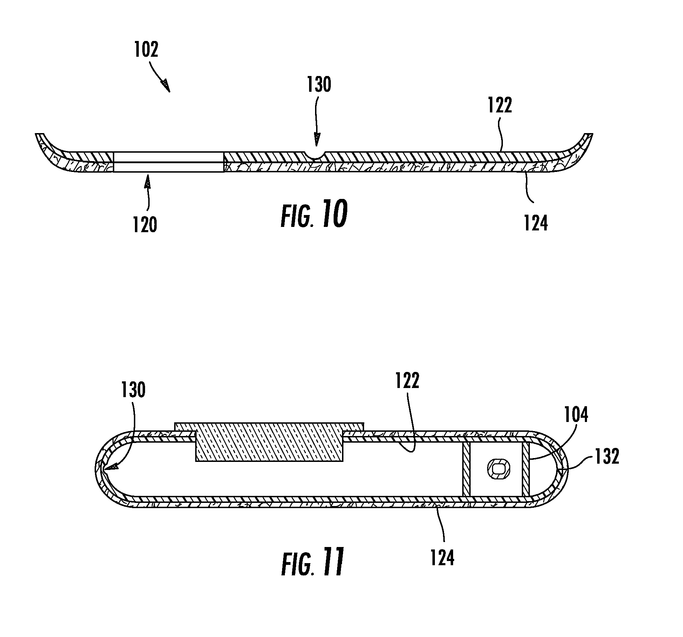

According to an exemplary embodiment, the visor body 102 includes one or more features that facilitate the movement (e.g., rotation, etc.) of the first body portion 116 and the second body portion 118 toward the assembled or folded position. Referring to FIGURE 10, such a feature is an area of reduced thickness in the core 122, shown as a recess 130. The recess 130 functions as a hinge (e.g., living hinge, etc.) that facilitates movement of the visor body 102. According to an exemplary embodiment, the recess 130 extends continuously along the edge about which the first body portion 116 is integrally formed with the second body portion 118. The recess 130 may be formed during the formation of the visor body 102 or may be formed as a secondary operation after the visor body 102 has been formed. For example, the recess 130 may be formed during the formation of the visor body 102 by providing a projection with the desired cross section (e.g., a small radius, etc.) in the surface of the form tool. Forming the recess 130 as a secondary operation may be achieved by overcompressing the core 122 or by milling a portion of the core 122 using a waterjet or another suitable machining device.

FIGURE 11 illustrates a cross-section of the visor 100 after the visor body 102 has been folded about the recess 130 to form the visor 100. Once formed, the visor 100 includes a seamless edge along its bottom portion and a relatively thin seam 132 along its side and top portions. Similar to the embodiment detailed above, the edges of the visor body 102 may be configured so that the relatively thin seam 132 along the side and top portions provides a smooth or continuous contour between the first body portion 116 and the second body portion 118. For example, one or more of the edges of the first body portion 116 and the second body portion 118 may be configured so that the cover material 124 is longer than the core 122. Such a configuration would allow the cover material 124 to be folded or tucked inward to substantially conceal the core 122. This could be accomplished by kiss cutting the core 122 and then die cutting the cover material 124 so that it extends past the core 122 (i.e., is longer or larger than the core 122). Other options for improving the appearance of the seam 132 include, but are not limited to, folding over both the cover material 124 and the core 122 at one or more of the edges of the first body portion 116 and the second body portion 118.

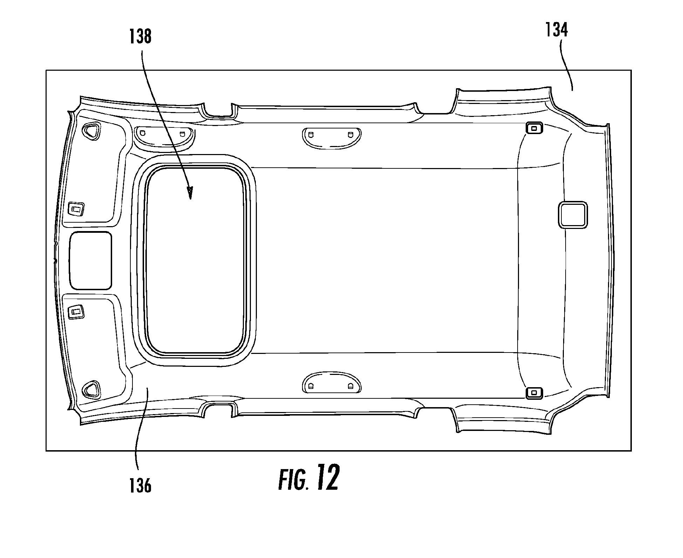

FIGURE 12 illustrates a headliner stock material according to an exemplary embodiment. The headliner stock is shown as a substantially rectangular sheet 134 from which a vehicle headliner 136 may be cut out or otherwise formed. According to an exemplary embodiment, one or more visor bodies 102 are cut out or otherwise formed from the sheet 134. The sheet 134 may be used to form only visor bodies 102 or may be used to form the vehicle headliner 136 in combination with one or more visor bodies 102. For example, the material 138 removed to form a sunroof opening in the headliner 136 may be used to form one of more visor bodies 102. According to the various alternative embodiments, the vehicle panel may be provided in any of a number of shapes and sizes.

The construction and arrangement of the elements of the visor for a vehicle as shown in the exemplary embodiments is illustrative only. Although only a few embodiments of the present inventions have been described in detail in this disclosure, those skilled in the art who review this disclosure will readily appreciate that many modifications are possible (e.g., variations in sizes, dimensions, structures, shapes and proportions of the various elements, values of parameters, mounting arrangements of hardware and accessories, use of materials, colors, orientations, etc.) without materially departing from the novel teachings and advantages of the subject matter recited herein. For example, elements shown as integrally formed may be constructed of multiple parts or elements, the position of elements may be reversed or otherwise varied, and the nature or number of discrete elements or positions may be altered or varied. It should be noted that the elements and/or assemblies of the visor may be constructed from any of a wide variety of materials that provide sufficient strength or durability, including any of a wide variety of plastic or composite materials (such as high-impact plastic for the core and pliable materials for the cover) in any of a wide variety of colors, textures and combinations. Other substitutions, modifications, changes and omissions may be made in the design, operating conditions and arrangement of the preferred and other exemplary embodiments without departing from the scope of the present inventions as defined by the appended claims.

## Claims

1. A method of manufacturing a visor (100) for a vehicle (10), the method comprising:
providing a sheet material used to form a vehicle panel, the sheet material having a rigid core (122) and a cover layer (124) coupled to an outer surface of the rigid core (122);
forming a visor body (102) from the sheet material, the visor body (102) having a first body portion (116) and a second body portion (118); providing a carrier (104) configured to support at least one accessory associated with the visor (100); moving the visor body (102) to at least partially conceal the carrier (104); and coupling the visor body (102) to the carrier (104), **characterized in that** the cover layer (124) is coupled to the rigid core (122) before the visor body (102) is formed.

2. The method of Claim 1 wherein the step of providing a sheet material comprises providing a sheet material used to form a vehicle headliner (136).

3. The method of Claim 2 further comprising forming a vehicle headliner (136) and the visor body (102) from the same sheet material.

4. The method of Claim 3 further comprising using a portion of the sheet material associated with a sunroof opening in the headliner for forming the visor body (102).

5. The method of Claim 1 wherein the step of forming a visor body (102) from the sheet material comprises integrally forming the first body portion (116) with the second body portion (118) to provide a one-piece visor body (102).

6. The method of Claim 1 wherein the step of moving the visor body (102) to at least partially conceal the carrier (104) comprises moving the visor body (102) from a substantially flat position to a folded position.

7. The method of Claim 6 wherein the first body portion (116) is integrally formed with the second body portion (118) along a top edge of the visor body (102) to provide a visor (100) with a seamless top edge after the visor body (102) is moved to the folded position.

8. The method of Claim 6 wherein the first body portion (116) is integrally formed with the second body portion (118) along a bottom edge of the visor body (102) to provide a visor (100) with a seamless bottom edge after the visor body (102) is moved to the folded position.

9. The method of Claim 6 further comprising forming a recess (130) in the visor body (102) where the first body portion (116) is integrally formed with the second body portion (118) to assist in moving the visor body (102) to the folded position.

10. The method of Claim 9 wherein the step of forming the recess (130) in the visor body (102) comprises forming the recess (130) in the rigid core (122) without extending the recess (130) into the cover layer (124).

11. A visor (100) for a vehicle (10) formed by any of the methods of Claims 1-10.

12. The visor (100) of Claim 11 wherein the rigid core (122) is formed of a reinforced thermoplastic material.

13. The visor (100) of Claim 11 wherein the cover layer (124) is formed of a fabric material that provides a softened outer surface for the visor (100).

14. The visor (100) of Claim 11 wherein the at least one accessory supported by the carrier (104) includes at least one of a vanity pack, an electronic device and a mounting device.

## Patentansprüche

1. Ein Verfahren zum Herstellen eines Visiers (100) für ein Fahrzeug (10), wobei das Verfahren Folgendes beinhaltet: Bereitstellen eines Plattenmaterials, das zum Ausbilden eines Fahrzeugpaneels verwendet wird, wobei das Plattenmaterial einen starren Kern (122) und eine Deckschicht (124) besitzt, die an einer äußeren Oberfläche des starren Kerns (122) gekoppelt ist; Ausbilden eines Visierkörpers (102) aus dem Plattenmaterial, wobei der Visierkörper (102) einen ersten Körperabschnitt (116) und einen zweiten Körperabschnitt (118) besitzt; Bereitstellen eines Trägers (104), der konfiguriert ist, um mindestens ein mit dem Visier (100) assoziiertes Zubehör zu tragen; Bewegen des Visierkörpers (102), um den Träger (104) mindestens teilweise zu verdecken; und Koppeln des Visierkörpers (102) am Träger (104), **dadurch gekennzeichnet, dass** die Deckschicht (124) am starren Kern (122) gekoppelt wird, bevor der Visierkörper (102) ausgebildet wird.

2. Verfahren gemäß Anspruch 1, wobei der Schritt des Bereitstellens eines Plattenmaterials das Bereitstellen eines Plattenmaterials beinhaltet, das zum Ausbilden eines Fahrzeughimmels (136) verwendet wird.

3. Verfahren gemäß Anspruch 2, das ferner das Ausbilden eines Fahrzeughimmels (136) und des Visierkörpers (102) aus dem gleichen Plattenmaterial beinhaltet.

4. Verfahren gemäß Anspruch 3, das ferner das Verwenden eines Abschnitts beinhaltet, der mit einer Schiebedachöffnung im Fahrzeughimmel assoziiert ist, um den Visierkörper (102) auszubilden.

5. Verfahren gemäß Anspruch 1, wobei der Schritt des Ausbildens eines Visierkörpers (102) aus dem Plattenmaterial das integrale Ausbilden des ersten Körperabschnitts (116) mit dem zweiten Körperabschnitt (118) beinhaltet, um einen einteiligen Visierkörper (102) bereitzustellen.

6. Verfahren gemäß Anspruch 1, wobei der Schritt des Bewegens des Visierkörpers (102), um den Träger (104) mindestens teilweise zu verdecken, das Bewegen des Visierkörpers (102) aus einer im Wesentlichen flachen Position auf eine gefaltete Position beinhaltet.

7. Verfahren gemäß Anspruch 6, wobei der erste Körperabschnitt (116) integral mit dem zweiten Körperabschnitt (118) entlang einer Oberkante des Visierkörpers (102) ausgebildet wird, um ein Visier (100) mit einer nahtlosen Oberkante bereitzustellen, nachdem der Visierkörper (102) auf die gefaltete Position bewegt wurde.

8. Verfahren gemäß Anspruch 6, wobei der erste Körperabschnitt (116) integral mit dem zweiten Körperabschnitt (118) entlang einer Unterkante des Visierkörpers (102) ausgebildet wird, um ein Visier (100) mit einer nahtlosen Unterkante bereitzustellen, nachdem der Visierkörper (102) auf die gefaltete Position bewegt wurde.

9. Verfahren gemäß Anspruch 6, das ferner das Ausbilden einer Aussparung (130) im Visierkörper (102) beinhaltet, wo der erste Körperabschnitt (116) integral mit dem zweiten Körperabschnitt (118) ausgebildet ist, um das Bewegen des Visierkörpers (102) auf die gefaltete Position zu unterstützen.

10. Verfahren gemäß Anspruch 9, wobei der Schritt des Ausbildens der Aussparung (130) im Visierkörper (102) das Ausbilden der Aussparung (130) im starren Kern (122) beinhaltet, ohne die Aussparung (130) in die Deckschicht (124) zu erstrecken.

11. Ein Visier (100) für ein Fahrzeug (10), das durch eines der Verfahren gemäß Ansprüchen 1-10 ausgebildet wird.

12. Visier (100) gemäß Anspruch 11, wobei der starre Kern (122) aus einem verstärkten thermoplastischen Material ausgebildet ist.

13. Visier (100) gemäß Anspruch 11, wobei die Deckschicht (124) aus einem Stoffmaterial ausgebildet ist, das eine erweichte äußere Oberfläche für den Visier (100) bereitstellt.

14. Visier (100) gemäß Anspruch 11, wobei das mindestens eine vom Träger (104) getragene Zubehör mindestens eines einer Vanity-Einheit, einer Elektronikvorrichtung und einer Befestigungsvorrichtung einschließt.

## Revendications

1. Un procédé de fabrication d'un pare-soleil (100) pour un véhicule (10), le procédé comprenant :
la fourniture d'un matériau en feuille utilisé de façon à former un panneau de véhicule,
le matériau en feuille possédant un noyau rigide (122) et une couche de couverture (124) couplée à une surface extérieure du noyau rigide (122), la formation d'un corps de pare-soleil (102) à partir du matériau en feuille, le corps de pare-soleil (102) possédant une première partie de corps (116) et une deuxième partie de corps (118), la fourniture d'un support (104) configuré de façon à soutenir au moins un accessoire associé au pare-soleil (100), le déplacement du corps de pare-soleil (102) de façon à au moins partiellement masquer le support (104) et le couplage du corps de pare-soleil (102) au support (104), **caractérisé en ce que** la couche de couverture (124) est couplée au noyau rigide (122) avant que le corps de pare-soleil (102) ne soit formé.

2. Le procédé selon la Revendication 1 où l'opération de fourniture d'un matériau en feuille comprend la fourniture d'un matériau en feuille utilisé de façon à former une garniture de toit de véhicule (136).

3. Le procédé selon la Revendication 2 comprenant en outre la formation d'une garniture de toit de véhicule (136) et du corps de pare-soleil (102) à partir du même matériau en feuille.

4. Le procédé selon la Revendication 3 comprenant en outre l'utilisation d'une partie du matériau en feuille associée à une ouverture de toit ouvrant dans la garniture de toit pour la formation du corps de pare-soleil (102).

5. Le procédé selon la Revendication 1 où l'opération de formation d'un corps de pare-soleil (102) à partir du matériau en feuille comprend la formation d'un seul tenant de la première partie de corps (116) avec la deuxième partie de corps (118) de façon à fournir un corps de pare-soleil d'une seule pièce (102).

6. Le procédé selon la Revendication 1 où l'opération de déplacement du corps de pare-soleil (102) de façon à au moins partiellement masquer le support (104) comprend le déplacement du corps de pare-soleil (102) à partir d'une position sensiblement plane vers une position pliée.

7. Le procédé selon la Revendication 6 où la première partie de corps (116) est formée d'un seul tenant avec la deuxième partie de corps (118) le long d'une bordure supérieure du corps de pare-soleil (102) de façon à fournir un pare-soleil (100) avec une bordure supérieure continue une fois que le corps de pare-soleil (102) est déplacé vers la position pliée.

8. Le procédé selon la Revendication 6 où la première partie de corps (116) est formée d'un seul tenant avec la deuxième partie de corps (118) le long d'une bordure inférieure du corps de pare-soleil (102) de façon à fournir un pare-soleil (100) avec une bordure inférieure continue une fois que le corps de pare-soleil (102) est déplacé vers la position pliée.

9. Le procédé selon la Revendication 6 comprenant en outre la formation d'un évidement (130) dans le corps de pare-soleil (102), où la première partie de corps (116) est formée d'un seul tenant avec la deuxième partie de corps (118) de façon à favoriser le déplacement du corps de pare-soleil (102) vers la position pliée.

10. Le procédé selon la Revendication 9 où l'opération de formation de l'évidement (130) dans le corps de pare-soleil (102) comprend la formation de l'évidement (130) dans le noyau rigide (122) sans étendre l'évidement (130) dans la couche de couverture (124).

11. Un pare-soleil (100) pour un véhicule (10) formé selon l'un quelconque des procédés des Revendications 1 à 10.

12. Le pare-soleil (100) selon la Revendication 11 où le noyau rigide (122) est formé d'un matériau thermoplastique renforcé.

13. Le pare-soleil (100) selon la Revendication 11 où la couche de couverture (124) est formée d'un tissu qui fournit une surface extérieure adoucie pour le pare-soleil (100).

14. Le pare-soleil (100) selon la Revendication 11 où le au moins un accessoire soutenu par le support (104) comprend au moins un élément parmi une mallette de toilette, un dispositif électronique et un dispositif de montage.
